# EUROPEAN PATENT APPLICATION

(11) **EP 3 470 639 A1**
(43) Date of publication of application: **17.04.2019**
(21) Application number: 17196592.4
(22) Date of filing: 16.10.2017
(51) Int. Cl.: F01N 3/20

(54) **DEVICE AND METHOD FOR GENERATING A REDUCING AGENT GAS FROM A LIQUID OR SOLID REDUCING AGENT**

(71) Applicant: Winterthur Gas & Diesel Ltd., 8401 Winterthur (CH)
(72) Inventor: Kadau, Dirk, 8046 Zürich (CH); Brutsche, Martin, 8418 Schlatt (CH); Peitz, Daniel, 5400 Baden (CH); Elsener, Martin, 5313 Klingnau (CH); Carelli, Andreas, 8305 Dietlikon (CH)
(74) Representative: Hepp Wenger Ryffel AG

(57) **Abstract**

It is suggested to provide a device (1) for generating a reducing agent gas from a solid or liquid reducing agent. The reducing agent gas is preferably suited for nitrogen oxide reduction in an exhaust gas of a combustion engine. The device comprises a reactor (2) with an inner volume (3) and an inlet (26) for a reducing agent solution and an outlet (27) for the reducing agent gas. The device (1) further comprises a heating system (4) disposed at least partially in the inner volume (3) and a heating control unit (5) for controlling the heating system (4). The inner volume (3) comprises a first and a second heating zone (6, 7). The first and the second heating zones (6, 7) each comprise at least one heating element (11, 12). The first and second heating zones (6, 7) are controlled independently of each other by the heating control unit (5).

## Description

The present invention relates to a device and a method for generating a reducing agent gas from a liquid or solid reducing agent according to the preamble of the independent claims.

In general, the invention relates to selective catalytic reduction (SCR) systems. SCR technology is used to reduce the level of nitrogen oxides (NOₓ) in an exhaust gas of a combustion engine. SCR is commonly used in land based engines, e.g. heavy duty vehicles, industrial plants and other applications. SCR technology has also been used in marine environments in combination with two-stroke diesel engines. Due to regulatory requirements for said marine diesel engines and land based engines, there is an increased need for efficient SCR systems.

SCR may be based on the reduction of nitrogen oxides in an exhaust gas with ammonia (NH₃). Typically, ammonia is generated by injecting a urea solution into the exhaust gas of the combustion engine. The urea solution is sprayed with nozzles into the hot exhaust gas, where the liquid urea solution reacts to ammonia, carbon dioxide and water vapour. The ammonia then reduces the nitrogen oxides under the influence of a catalyst in an SCR reactor to nitrogen (N₂). The generation of ammonia from liquid urea is endothermic. Thus, decomposition of the urea solution is only complete and the nitrogen oxides (NOₓ) are only reduced to nitrogen (N₂), if the exhaust gas is sufficiently hot.

US 6,077,491 describes a method for generating ammonia from urea. The method is based on the hydrolysis of an aqueous solution of urea. The urea is heated under pressure to form a mixture of gaseous ammonia, carbon dioxide and water. The produced gas mixture is let into a process gas stream. The reactor has the disadvantage of requiring relatively large volume reactors for a desired output.

The object of the invention is to provide a sufficient volume stream of a reducing agent gas, while at the same time saving space and weight. In particular, the object of the invention is to provide a compact device for generating a reducing agent gas from a liquid or solid reducing agent.

According to the invention, the problem is solved with a device and a method according to the independent claims and their characterising features.

It is suggested to provide a device for generating a reducing agent gas from a solid or liquid reducing agent. The reducing agent gas is preferably suited for nitrogen oxide reduction in an exhaust gas of a combustion engine. The device comprises at least one reactor with an inner volume and an inlet for a reducing agent solution and an outlet for the reducing agent gas. The device further comprises a heating system disposed at least partially in the reactor, at least one heating element and a heating control unit for controlling the heating system. The inner volume comprises a first and a second heating zone. The first and the second heating zone each comprise at least one heating element and the first and second heating zones are controllable independently of each other by the heating control unit. Additionally or alternatively to the heating zones the reactor comprises a mixing unit in the inner volume such that the reducing agent solution is uniformly heated.

Thereby, the heating system is adapted to maximize a heat transfer to the inner volume. In a preferred embodiment, the heating control unit is adapted to heat the inner volume with a uniform temperature distribution. Further preferred, the heating control unit is adapted to control the heating zones such that the heating zones are heated at a uniform temperature. In a preferred embodiment, the heating element(s) are disposed at least partially in the inner volume of the reactor. Thereby, a surface area for a heat transfer is increased. Additionally or alternatively the heating elements may form a part of a wall of the reactor defining the inner volume or may be disposed adjacent the wall defining the inner volume, preferably on a side opposing the inner volume.

Preferably, each heating zone comprises at least two or three or four heating elements. The heating elements in the first and second heating zones are controlled independently of each other by the heating control unit. Thereby, an input of heating energy is maximized.

Additionally or alternatively, the optimized heating is achieved by the heating system including a mixing unit in the inner volume. The mixing unit is adapted to circulate the reducing agent solution in the inner volume of the reactor. Thereby, a heat amount transferred from the heating elements to the reducing agent solution is increased, since the heating element can transfer a higher amount of energy without overheating. Further, the solution is homogenously heated. The heating system may comprise multiple heating elements.

Further preferred, the heating system may comprise one or more direct or indirect temperature sensor(s) and the heating control unit is adapted keep a temperature in the inner volume at a pre-set temperature. Thereby, constant reaction conditions are provided.

In a particularly preferred embodiment the heating system comprises two or more direct or indirect temperature sensors. The heating control unit may be adapted to control the heating elements and/or mixing unit such that the inner volume has a uniform temperature distribution with the temperature sensors.

The liquid or solid reducing agent may be a urea solution, solid urea and/or biuret. The reducing agent gas preferably comprises ammonia. Additionally, the reducing agent gas may comprise CO₂ and H₂O.

Since the heating zones are controllable independently, an overheating of the heating element(s) in the gaseous phase may be prevented. Thereby, a heating energy, which is transferred, may be maximised without damaging the heating system. The higher heat transfer allows a higher volume stream of liquid reducing agent into the reactor, since the liquid reducing agent is heated faster to a temperature where the reaction starts. Further, the inner volume can be heated faster to higher temperatures, where the reaction occurs faster.

In a preferred embodiment the device may comprise at least two, three or four reactors. Thereby, a throughput is increased.

The reactor volume may be partially filled with reducing agent solution and may be partially filled with reducing agent gas. One heating zone may be in a gaseous phase and another heating zone may be in a liquid phase. Further, the independently controllable heating zones allow a homogeneous temperature distribution and thus reaction conditions within the inner volume.

The reactor is preferably a pressure tank. In particular, the reactor is adapted for pressures of up to 80 bar, preferably 2 to 80 bar. The reaction occurs faster at higher temperatures. Such a reactor allows higher reaction rates. The reactor is preferably adapted for temperatures of up to 300°C.

In a preferred embodiment, the inner volume comprises at least three heating zones. Each heating zone comprises at least one heating element. Thereby, the temperature distribution may be more homogeneous.

In a preferred embodiment, the heating zones each comprise at least two heating elements, wherein each heating element is controllable independently. The heating elements are preferably heating rods. Such a control system can switch off defect heating rods, without interrupting the reaction. Thereby, energy is saved.

The heating rods may be electrical. The heating rods may be U-shaped. Heating rods are advantageous, since they may extend through the inner volume and thereby provide a large surface area for heating the inner volume.

Alternatively or additionally, heat may be provided by exhaust gas of engine.

In a preferred embodiment, each heating zone comprises a direct or indirect temperature sensor. Preferably, at least one of the heating elements comprises the direct or indirect temperature sensor. In particular, each heating zone comprises at least one heating element with a direct or indirect temperature sensor. An indirect measurement of the temperature may be adapted to measure a heating power or resistance of a corresponding heating element or heating zone. The temperature sensors may be separate from the heating elements. The temperature sensor(s) may additionally or alternatively be (a) thermocouple(s) and/or (a) resistance thermometer(s).

The reactor may have a tubular shape with a longitudinal axis. The heating rods may extend along the longitudinal axis. A transferable heating power correlates to a surface area of the heating rods. Longitudinally extending heating rods maximize this surface area in a tubular reactor.

In a preferred embodiment, the inner volume includes a longitudinal axis, which extends substantially perpendicular to a direction of a force of gravity during intended use. The heating rods extend substantially in the direction of the longitudinal axis and/or the heating rods are arranged substantially perpendicular to a direction of a force of gravity during intended use. The heating rods have a rod longitudinal axis which is arranged substantially perpendicular to a direction of a force of gravity during intended use. Intended use may include a use in ships offshore, in which the longitudinal direction may be perpendicular only during phases due to a motion of the ship as a result of waves. Thereby, fewer heating rods may be necessary for heating the inner volume. Further, the heating zones may be defined such that a first heating zone heats the reducing agent solution and another heating zone heats the gaseous reducing agent.

In a preferred embodiment, the inner volume of the reactor is smaller than 3200 litres, preferably smaller than 1600 litres and particularly preferred smaller than 200, 120 or 60 litres. Thereby, a small device with a low weight is provided. Such a device may be advantageous in applications such as marine applications, where space is limited.

In a preferred embodiment the size of the inner volume is dependent on a desired throughput. For example, the inner volume may be up to four times the hourly feed rate. Particularly preferred, the inner volume may be up to two times the desired hourly feed rate. Thereby, a small device with a low weight is provided.

In a preferred embodiment, the reactor comprises a dome for collecting gas. Thereby, the reducing agent gas may be collected and separated from the reducing agent solution. Hence, no liquid components escape from the inner volume.

In a preferred embodiment, the device comprises a dosage unit, which is disposed upstream of the inlet of the reactor. The dosage unit may comprise one or two or more dosage pump(s). Alternatively, the dosage unit may be a pump with a dosage valve. Thereby, a feed stream into the reactor may be controlled. As a result, an output of reducing agent gas, i.e. ammonia, is also controlled.

Particularly preferred the device comprises one dosage unit and at least two reactors. Thereby, a compact device with a high throughput is built and space may be saved.

In one embodiment, the device may comprise a mixing tank upstream of the inlet of the reactor, wherein the mixing tank is adapted for mixing a solid reducing agent with a solvent. The solid reducing agent is preferably solid urea and the solvent is preferably water. Solid reducing agent may allow an easier storage and handling of the reducing agent. In particular, solid urea is advantageous, because it is a stable, non-volatile material, which can be safely stored, transported and handled. Further, solid urea is available at a low cost.

The water, which is used for mixing, may be from a water separator of a marine vessel. The device may include a filter for filtering the water from the water separator.

In one embodiment, the device may comprise a pipe heating for an inlet piping. Thereby, higher urea concentrations in the solution may be transportable without damaging the inlet piping to enable higher urea concentrations in the urea solution. Additionally or alternatively the mixing tank may comprise a heating.

The heating for the inlet piping may heat the inlet piping to up to 50°C, 60°C, 70°C or 80°C. By heating the inlet piping, the energy consumption of the reactor is reduced and higher concentration of the urea may be transported through the piping without damaging the piping.

When the inlet piping is heated, the urea solution may comprise up to 77 weight% urea. Alternatively, the urea solution may comprise 40 weight% urea.

In a preferred embodiment, the reactor includes one or more outlets for gaseous reaction products. Particularly preferred, the reactor does not include an outlet for liquid components. Such a reactor is simpler to build.

In a preferred embodiment, the device includes a pressure relief valve at an outlet of the reactor. Thereby, a pressure in the reactor may be controlled. In particular, the device includes a pressure sensor at an outlet of the reactor or in the reactor. Further preferred, the device includes a pressure controller adapted to keep a pressure in the inner volume at a constant pre-set level. Such a device allows a control of the reaction conditions.

It is further suggested to provide an engine comprising a device for generating a reducing agent gas as hereinabove presented. The engine is preferably a combustion engine, particularly preferred a two stroke combustion engine.

It is further suggested to provide a marine vessel including the device for generating the reducing agent gas.

It is further suggested to provide a method for generating a reducing agent gas from a liquid or solid reducing agent. Preferably, the method is conducted with a device for generating a reducing agent gas as described hereinabove. The method comprises the steps of:
- Introducing, a reducing agent solution into an inner volume of a reactor through an inlet, preferably with a pump
- Heating the reducing agent solution in the inner volume with a heating system comprising a first and a second heating zone in the inner volume, wherein the first and the second heating zones each comprise at least one heating element and wherein the heating zones are controllable independently of each other by a heating control unit for controlling the heating system or with heating system comprising at least one heating element and a mixing unit in the inner volume such that the reducing agent solution is uniformly heated
- Reacting the reducing agent solution to gaseous ammonia
- Removing the gaseous ammonia through an outlet of the inner volume.

In a one embodiment, in the heating step, the first heating zone is in a liquid phase in the reactor. If the second heating zone is in the gaseous phase, a heating power is higher in the first heating zone. Gas has a lower thermal conductivity and heating elements in the gaseous phase may overheat. With such a method, a heating power is maximized without damaging the heating elements in the gaseous phase.

In a preferred embodiment, the method additionally includes a mixing and a guiding step. In the mixing step the reducing agent solution is mixed by solving solid urea in water in a mixing tank. In the guiding step the reducing agent solution is guided from the mixing tank to the reactor through an inlet piping. Preferably, the reducing agent solution is pumped. Preferably the reducing agent solution is guided through a heated pipe. The mixing tank may pre-heat the solution.

In one embodiment the solution may be heated in the mixing tank and/or the pipe to a temperature below a boiling point of the reducing agent solution but above a concentration dependent crystallization point of the reducing agent solution. In certain embodiments the temperature may be up to 120°C or 80°C.

In a preferred embodiment of the method, the water is supplied by a water separator of a marine vessel. In particular, the water separator condenses humidity in charge air. The water may be collected in a tank. The water may be filtered before mixing the water with the solid urea. Thereby, fresh water in an appropriate quality for the urea solution is provided.

In a preferred embodiment, during the reacting step, the reducing agent solution is exposed to pressures from 2 to 80 bar. Additionally or alternatively, the reducing agent solution may be heated to temperatures up to 300°C. Thereby, the reaction from urea solution to ammonia is accelerated.

In a preferred embodiment, the method additionally comprises the step of injecting the reducing agent gas into an exhaust gas of a combustion engine. The combustion engine is preferably a two stroke engine.

Non-limiting embodiments of the invention are described, by way of example only, with respect to the accompanying drawings, in which:
- Figure 1:: is a process scheme for generating gaseous ammonia,
- Figure 2:: is a detailed process scheme with a reactor and heating zones, and
- Figure 3:: a cross-section of a reactor.

Ammonia is a highly volatile gas with adverse physiological effects, which can be intolerable at very low concentration. At high concentrations ammonia presents substantial environmental and operating hazards and risks. It is classified as a hazardous material and many precautions are required in transporting and handling it safely. Solid urea, on the other hand is a stable, non-volatile and environmentally friendly material that is safely transported. Solid urea or urea solution may be safely stored and handled with fewer risks and can serve as safe source of ammonia. A reactor 2 as shown in the following is used for converting urea solution to ammonia. The basic chemistry employed in the conversion of urea to ammonia comprises the following two reaction steps:

(1) CO(NH₂)₂ -> HNCO + NH₃ (urea) (isocyanic acid) (Ammonia)

(2) HNCO + H₂O -> NH₃ + CO₂ (isocyanic acid) (water) (Ammonia) (Carbon dioxide)

The first reaction, in which isocyanic acid is formed, is a thermolysis and endothermic, while the second, in which ammonia and carbon dioxide are produced is exothermic. In total, the overall reaction is endothermic. Thus, the reaction requires heat and quickly stops when a supply of heat is withdrawn. Excess water may promote the reaction. Thus the overall reaction is as follows:

(3) CO(NH₂)₂ + H₂O - > 2 NH₃ + CO₂ (urea) (water) (Ammonia) (Carbon dioxide)

The reaction commences at around 110°C and accelerates at around 150°C to 160°C.

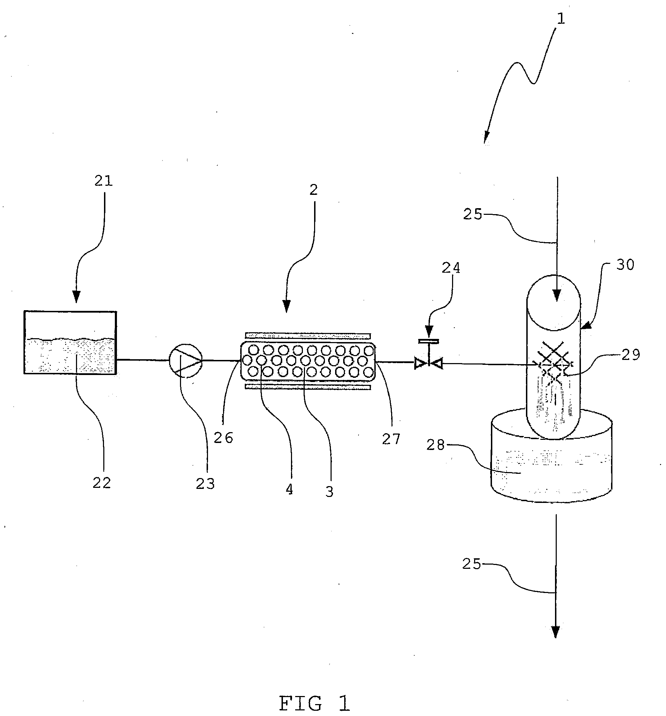

A device 1 for generating ammonia is shown in figure 1. The ammonia is generated from a liquid solution 22. The liquid solution 22 is stored in a tank 21 and comprises urea, which is solved in water. From the tank 21 the urea solution is pumped with a pump 23 to a reactor 2. The urea solution is let into the reactor 2 through an inlet 26 and out of the reactor 2 through an outlet 27. An inner volume 3 of the reactor comprises a heating system 4. The reactor is a pressure tank and rated for pressures up to 80 bar. The heating system 4 heats up the urea solution to 300°C. Thus, the endothermic reaction of urea and water to ammonia is enabled.

Furthermore, a pressure within the reactor rises due to the heating. The pressure rises because the reactants are liquid, while the reaction products are gaseous. A pressure relief valve 24 controls the pressure within the reactor. Since all reaction products are gaseous, only gaseous products are let through the pressure relief valve 24. The gaseous products are then injected into an exhaust gas stream 25. The exhaust gas stream 25 is let through an exhaust pipe 30 to a mixing zone 29. In the mixing zone 29 the reaction products, in particular the ammonia, are mixed with the exhaust gas stream 25. The mixture of gases is then let to an SCR catalyst 28. The catalyst accelerates the reduction of nitrogen oxides with ammonia in the exhaust gas to nitrogen and water. Thus, the exhaust gas 25, which is let out, is cleaned.

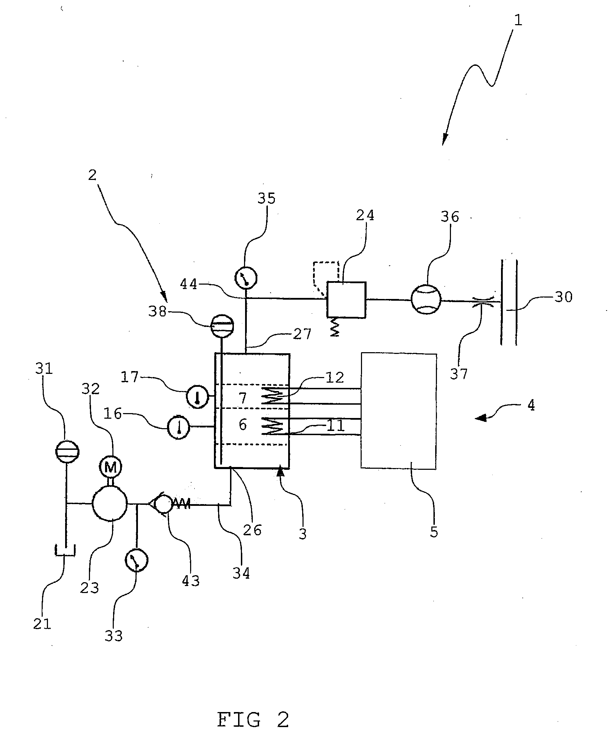

Figure 2 shows a detailed process scheme for the device 1. The tank 21 includes a tank sensor 31. The tank sensor 31 measures a current filling level of the tank 31. Further, the pump 23 includes a motor 32, which is electrical. After the pump 23, an inlet piping 34 comprises a pressure sensor 33. The inlet piping 34 guides the urea solution 22 from the tank 21 to the inlet 26 of the reactor 2.

The inlet piping 34 comprises a check valve 43. The check valve 43 prevents a backflow from the reactor 2 to the tank 21. At the same time the valve 43 allows a flow from the tank to the reactor, provided the pump generates sufficient pressure, i.e. a higher pressure than in the reactor 2.

The inlet piping 34 leads the urea solution 22 to the reactor 2 and into the inner volume 3 of the reactor 2. The reactor itself is separated into two heating zones 6 and 7. The solution 22 enters the reactor 2 at a bottom of the inner volume 3. The bottom of the reactor forms the first heating zone 6. In the first heating zone 6, a heating element 11 starts heating up the urea solution, which is at the temperature of the inlet piping 34. A temperature in the first heating zone 6 is measured by a first temperature sensor 16. Since the urea solution enters the reactor at a temperature below 110°C, for example at room temperature, the first heating zone transfers a high amount of energy to the urea solution. As the urea solution 22 is heated up, it rises in the inner volume 3 of the reactor 2 to the second heating zone 7. In the second heating zone 7, heat is transmitted to the urea solution by a second heating element 12. Since the reaction products are gaseous, there may be a phase boundary in the inner volume 3 between gaseous reaction products and the liquid solution 22. The heating elements 11, 12 are electrical heating rods. Each heating element 11, 12 belongs to one of the heating zone 6, 7.

The liquid solution heats up until a target temperature is reached. Thus, the heating power transferred to the solution 22 in the lowest heating zones, i.e. in the first heating zone 6 is higher than in the second heating zone 7.

The heating system 4 allows an independent control of the individual heating elements 11, 12 in the respective heating zones 6, 7. A control unit 5, which controls heating elements 11 and 12, can control each heating element 11, 12. Like the temperature in the first heating zone 6, the temperature of the second heating zone 7 is monitored by a second temperature sensor 17. The control unit 5 is set to maintain a pre-set temperature in the inner volume 3. The sensors 16, 17 provide a control loop to regulate the temperature.

At a top portion, the reactor 2 includes the outlet 27. To the outlet 27, an outlet piping 44 with an outlet pressure sensor 35 is connected. Downstream of the outlet pressure sensor 35, a pressure relief valve 24 controls the pressure in the outlet piping 44. The pressure sensor 35 and the pressure relief valve 24 in connection with the pump 23 and the check valve 43 allow a control of a pressure within the reactor 2.

The device 1 further includes a pressure control unit (not shown). The pressure control unit regulates the pressure in reactor 2 via the valve 24. The sensors 33 and 35 provide a feedback to the pressure control unit. The pressure control unit is set to a target pressure.

An output is determined by a delivery rate of the pump 23 as well as a temperature within the reactor, which is controlled by the heating system 4 and a pressure inside the reactor 2. The pressure and the temperature are kept constant by the respective control units. The output is thus only determined by the delivery rate of the pump 23 and dosage system. This output is then measured by a mass flow meter 36. Lastly, the reaction products are injected via an injector 37 into the exhaust pipe 30. A filling level in the reactor 3 is monitored with a reactor sensor 38.

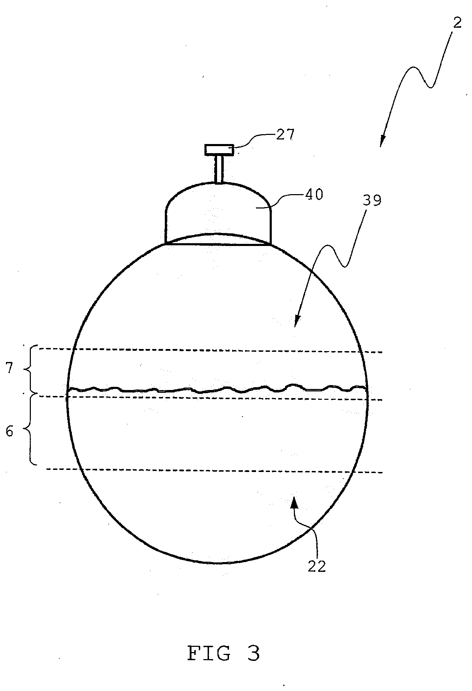

Figure 3 shows a cross section of the reactor 2 and its inner volume 3. The heating zones 6, 7 are indicated by dotted lines in figure 3. The heating elements 11, 12 comprise temperature sensors, which are integrated within the heating elements 11, 12. Further, the reactor 2 comprises thermocouples, which additionally measure a temperature of the urea solution or the reaction products in the gaseous phase.

As can be seen from figure 3, the reactor is partly filled with urea solution and partly filled with gaseous products of the reaction. The heating elements 12- of the second heating zone 7, which are in the gaseous phase, do not need to heat the inner volume as much and thus transmit less energy.

The reactor 2 comprises a dome 40. The reactor 2 comprises a circular cylindrical shape. The dome 40 extends from the circular cylindrical shape in an upward direction. The dome 40 allows a collection of the gaseous reaction products and in particular of gaseous ammonia 39. The gaseous reaction products are then let out of the outlet 27, which is on top of the dome. Further, the dome allows a separation of the liquid solution and the gaseous reaction products. Thus, gaseous ammonia 39 is extracted from the reactor 2.

## Claims

1. Device (1) for generating a reducing agent gas from a solid or liquid reducing agent, preferably for NOₓ reduction in an exhaust gas of a combustion engine comprising:
- at least one reactor (2) with an inner volume (3) and an inlet (26) for a reducing agent solution and an outlet (27) for a reducing agent gas, preferably comprising ammonia,
- a heating system (4) disposed at least partially in the reactor (2), preferably in the inner volume (3), and comprising at least one heating element (11, 12),
- a heating control unit (5) for controlling the heating system (4),
**characterized in that,**
- the inner volume (3) comprises a first and a second heating zone (6, 7), wherein the first and the second heating zone each comprise at least one heating element (11, 12), and wherein the first and second heating zones (6, 7) are controllable independently of each other by the heating control unit (5) and/or
- the reactor (2) comprising a mixing unit in the inner volume (3).

2. Device (1) according to claim 1 **characterized in that** the inner volume (3) comprises at least three heating zones, wherein each heating zone comprises at least one heating element (11, 12).

3. Device (1) according to one of the claims 1 or 2 **characterized in that** the heating zones (6, 7) each comprise at least two heating elements (11, 12), wherein each heating element is controllable independently.

4. Device (1) according to one of the claims 1 to 3 **characterized in that** each heating zone (6, 7), preferably at least one of the heating elements (11, 12), comprises a direct or indirect temperature sensor (16, 17), preferably each heating zone comprises at least one heating element (11, 12) with a temperature sensor (16, 17).

5. Device (1) according to one of the preceding claims **characterized in that** the heating element/s (11, 12) comprise (a) heating rod/s, preferably electrical heating rods.

6. Device (1) according to claim 5 **characterized in that** the inner volume (3) includes a longitudinal axis, which extends in a direction substantially perpendicular to a direction of a force of gravity during intended use, wherein the heating rods extend substantially in the direction of longitudinal axis and/or the heating rods are arranged substantially perpendicular to a direction of a force of gravity during intended use.

7. Device (1) according to one of the preceding claims **characterized in that**, the reactor (2) comprises a dome (40) for collecting gas.

8. Device (1) according to one of the preceding claims **characterized in that** the device (1) comprises a dosage unit, preferably a dosage pump (23), which is disposed upstream of the inlet (26).

9. Engine, preferably a two-stroke engine, comprising a device (1) according to one of the preceding claims.

10. Marine vessel including a device (1) or engine according to one of the preceding claims.

11. A method for generating a reducing agent gas from a solid or liquid reducing agent preferably with a device (1) according to one of the claims 1 to 10, comprising the steps of:
- Introducing a reducing agent solution into an inner volume (3) of a reactor (2) through an inlet, preferably with a pump (23)
- Heating the reducing agent solution in the inner volume (3) with a heating system (4) comprising a first and a second heating zone (6, 7) in the inner volume (3), wherein the first and the second heating zones (6, 7) each comprise at least one heating element (11, 12) and wherein the heating zones are controllable independently of each other by a heating control unit (5) for controlling the heating system (4) or with heating system comprising at least one heating element and a mixing unit in the inner volume such that the reducing agent solution is uniformly heated
- Reacting the reducing agent solution to a reducing agent gas, preferably comprising gaseous ammonia
- Removing the reducing agent gas through an outlet (27) of the reactor (2).

12. Method according to claim 11, wherein in the heating step, if one heating zone (6) is in a liquid phase in the reactor (2) and another heating zone (7) is in a gaseous phase in the reactor (2), a heating power is higher in the heating zone (6) in the liquid phase.

13. Method according to one of the claims 11 to 12, wherein the method further comprises the step of:
- Mixing the reducing agent solution by solving solid urea in water in a mixing tank, preferably pre-heating the solution
- Guiding, preferably pumping, the reducing agent solution from the mixing tank to the reactor (2) through an inlet piping (34), preferably through a heated pipe.

14. Method for reducing for NOₓ in an exhaust gas comprising a method according to one of the claims 11 to 13, wherein the method further comprises the step of:
- Injecting the reducing agent gas into an exhaust gas of a combustion engine, preferably a 2-stroke diesel engine.
